# EUROPEAN PATENT APPLICATION

(11) **EP 1 512 870 A1**
(43) Date of publication of application: **09.03.2005**
(21) Application number: 04021039.5
(22) Date of filing: 03.09.2004
(51) Int. Cl.: F04B 27/10, F04B 27/18, F04B 1/14

(54) **Swash plate type variable displacement compressor**

(30) Priority: 05.09.2003 JP 2003314795; 04.06.2004 JP 2004167738; 30.07.2004 JP 2004224709
(71) Applicant: Kabushiki Kaisha Toyota Jidoshokki, Kariya-shi, Aichi-ken 448-8671 (JP)
(72) Inventor: Wakita, Tomohiro, Kariya-shi Aichi-ken 448-8671 (JP); Nakayama, Osamu, Kariya-shi Aichi-ken 448-8671 (JP); Sakakibara, Kiyohiko, Kariya-shi Aichi-ken 448-8671 (JP); Kayukawa, Hiroaki, Kariya-shi Aichi-ken 448-8671 (JP); Fukanuma, Tetsuhiko, Kariya-shi Aichi-ken 448-8671 (JP); Taneda, Yoshio, Kariya-shi Aichi-ken 448-8671 (JP); Yamaguchi, Tsuyoshi, Kariya-shi Aichi-ken 448-8671 (JP)
(74) Representative: HOFFMANN - EITLE

(57) **Abstract**

A variable displacement compressor includes a swash plate guiding member that rotates integrally with and inclines relative to a drive shaft, a swash plate supported by the guiding member, and a piston engaged with the swash plate via a shoe. A clutch is located between the guiding member and the swash plate. The clutch is switched between an engaged state, where the clutch permits the guiding member and the swash plate to rotate integrally, and a disengaged state, where the clutch permits the guiding member and the swash plate to rotate relative to each other. Therefore, the compressor is capable of switching between a state where improving the displacement controllability is prioritized and a state where reduction of mechanical loss between the swash plate and the shoes is prioritized.

## Description

### BACKGROUND OF THE INVENTION

The present invention relates to a swash plate type variable displacement compressor, which is capable of changing its displacement.

For example, in a refrigerant circuit of a vehicle air conditioner, a swash plate type variable displacement compressor is typically used as a refrigerant compressor. The swash plate type variable displacement compressor includes a drive shaft coupled to an output shaft of an engine, a swash plate that is tiltably supported by and rotates integrally with the drive shaft, and pistons each engaged with the swash plate with shoes.

Since the swash plate type variable displacement compressor has the configuration shown above, when swash plate rotates as the drive shaft rotates, the swash plate slides across the shoes and wobbles back and forth apparently in a direction along the axis of the drive shaft. Wobbling of the swash plate causes the pistons to reciprocate to compress gas. Also, by changing the inclination angle of the swash plate relative to the drive shaft, the stroke of the pistons is varied. Accordingly, the displacement of the swash plate type variable displacement compressor is changed.

A clutchless type compressor is known as one of the swash plate type variable displacement compressors other than a clutch type compressor, which is another swash plate type variable displacement compressor equipped with a clutch in a power transmission mechanism between its drive shaft and an engine. The clutchless type compressor has no clutch in the power transmission mechanism and permits power of the engine to be constantly transmitted. That is, the drive shaft of the swash plate type variable displacement compressor having no clutch is constantly rotated by the drive shaft of the engine when the engine is running. Therefore, when cooling is not needed, the vehicle air conditioner causes the compressor to perform an "OFF operation", in which the displacement of the swash plate type variable displacement compressor is minimized. Accordingly, the load on the engine (load for driving the swash plate type variable displacement compressor) is reduced, thereby improving the fuel economy of the engine.

The swash plate type variable displacement compressor having no clutch, that is the clutchless type compressor, has shoes that slide on a swash plate. Therefore, mechanical loss due to frictional resistance at the contacting portions of the swash plate and the shoes is great, thereby increasing the load on the engine. Particularly, in the swash plate type variable displacement compressor having no clutch, mechanical loss at the contacting portions of the swash plate and the shoes have been desired to be reduced for the same of decreasing the load on the engine during the OFF operation.

In response to such demand, improved structures of swash plate type variable displacement compressors have been proposed' (for example, see Fig. 1 of Japanese Laid-Open Patent Publication No 10-196525). In a typical improvement, a swash plate guiding member is coupled to a drive shaft to rotate integrally with and incline relative to the drive shaft. A swash plate is supported by the guiding member with bearings. When the guiding member rotates as the drive shaft rotates, the guiding member slips relative to the swash plate. Accordingly, the rotation speed of the swash plate is lower than that of the guiding member. Accordingly, the relative rotation speed of the swash plate and the shoes is lower than the relative rotation speed of the shoes and the guiding member. This reduces the mechanical loss at the contacting portions of the swash plate and the shoes. As a result, the load of the swash plate type variable displacement compressor acting on the engine is reduced.

However, since the rotation speed of the swash plate is lower than that of the guiding member in the above described improved swash plate type variable displacement compressor, the swash plate only receives a slight centrifugal force. Centrifugal force of the swash plate acts to cancel the inertial force of the piston, which is generated by reciprocation of the piston. Specifically, while the centrifugal force of the swash plate acts to decrease the inclination angle of the swash plate, the inertial force of the pistons act to increase the inclination angle of the swash plate.

Therefore, if the swash plate only receives said slight centrifugal force, the inclination angle of the swash plate cannot be smoothly.decreased against the inertial force of the pistons. This adversely affects the displacement control of the swash plate type variable displacement compressor. Particularly, when the swash plate type variable displacement compressor is operating at a high speed (high-speed rotation of the drive shaft), that is, when the inertial force of the piston is great, the problem is serious.

As described above, the prior art has a dilemma. That is, if the displacement control of a swash plate type variable displacement compressor is prioritized, the mechanical loss between the swash plate and the shoes is increased. Conversely, if reduction of mechanical loss generated between the swash plate and the shoes is prioritized, the displacement control of the swash plate type variable displacement compressor is degraded.

### SUMMARY OF THE INVENTION

Accordingly, it is an objective of the present invention to provide a swash plate type variable displacement compressor that is capable of switching between a state where improving the displacement controllability is prioritized and a state where reduction of mechanical loss between the swash plate and the shoes is prioritized.

To achieve the above-mentioned objective, the present invention provides a swash plate type variable displacement compressor. The compressor includes a drive shaft, a swash plate guiding member that is coupled to the drive shaft. The guiding member rotates integrally with and inclines relative to the drive shaft. The compressor further includes a swash plate supported by the guiding member, a shoe, and a piston engaged with the swash plate via the shoe. When the guiding member is rotated by rotation of the drive shaft, the piston reciprocates to compress gas. When an inclination angle of the swash plate relative to the drive shaft is changed as the guiding member inclines, the stroke of the piston is changed to vary the displacement of the compressor. A clutch is located between the guiding member and the swash plate. The clutch is switched between an engaged state, where the clutch permits the guiding member and the swash plate to rotate integrally, and a disengaged state, where the clutch permits the guiding member and the swash plate to rotate relative to each other.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a longitudinal cross-sectional view illustrating a compressor according to a first embodiment of the present invention;
Fig. 2 is an enlarged cross-sectional view illustrating a portion including a swash plate guiding member of the compressor shown in Fig. 1;
Fig. 3 is an enlarged cross-sectional view illustrating a portion including the guiding member when the inclination angle is minimized;
Fig. 4 is a plan view showing the hinge mechanism shown in Fig. 1 in a disassembled state;
Fig. 5 is a front view illustrating the axial slide limiting surface shown in Fig. 1;
Fig. 6 is a front view illustrating an axial slide limiting surface of a compressor according to a second embodiment of the present invention;
Fig. 7 is a partial cross-sectional view illustrating a portion including a boss of a compressor according to a third embodiment of the present invention;
Fig. 8 is a partial cross-sectional view illustrating a portion including a boss of a compressor according to a fourth embodiment of the present invention;
Fig. 9 is a partial cross-sectional view illustrating a portion including a boss of a compressor according to a fifth embodiment of the present invention;
Fig. 10 is a partial cross-sectional view illustrating a portion including a swash plate guiding member of a compressor according to a sixth embodiment of the present invention;
Fig. 11 is a partial cross-sectional view illustrating a portion including a swash plate guiding member of a compressor according to a seventh embodiment of the present invention;
Fig. 12 is a longitudinal cross-sectional view illustrating a compressor according to an eighth embodiment of the present invention;
Fig. 13 is a partial cross-sectional view illustrating a portion including a swash plate guiding member of a compressor according to a ninth embodiment of the present invention;
Fig. 14 is a partial cross-sectional view illustrating a portion including a clutch of a compressor according to a tenth embodiment of the present invention;
Fig. 15 is a plan view illustrating a portion including the clutch shown in Fig. 14;
Fig. 16 is a partial cross-sectional view illustrating a compressor according to an eleventh embodiment of the present invention;
Fig. 17 is a partial cross-sectional view illustrating a portion including a swash plate guiding member of a compressor according to a twelfth embodiment of the present invention;
Fig. 18 is a partial cross-sectional view illustrating the compressor shown in Fig. 17 when the inclination angle is minimized; and
Fig. 19 is a partial cross-sectional view illustrating a compressor according to a modified embodiment of the present invention.

### DETAILED DESCRIPTION OF THE PREFERRED EMBODIMENTS

A first embodiment of the present invention will now be described.

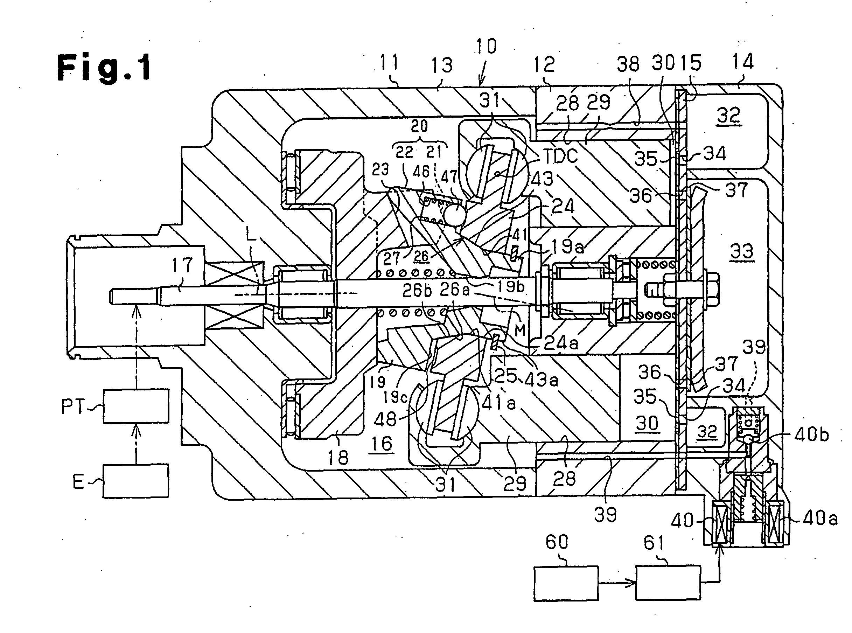

Fig. 1 is a longitudinal cross-sectional view illustrating a swash plate type variable displacement compressor 10 used in a refrigerant circuit of a vehicle air conditioner. As shown in Fig. 1, a housing 11 of the compressor 10 includes a cylinder block 12, a front housing member 13, and a rear housing member 14. The front housing member 13 is secured to one end (left end as viewed in the drawing) of the cylinder block 12. The rear housing member 14 is secured to the other end (right end as viewed in the drawing) of the cylinder block 12 with a valve assembly 15 in between. In Fig. 1, the left side is (the side corresponding to the front housing member 13) is referred to as. the front of the compressor 10, and the right side (the side corresponding to the rear housing member 14) is referred to as the rear of the compressor 10, as necessary.

A space defined by the inner wall of the front housing member 13 and the cylinder block 12 forms a crank chamber 16. One end (front end) of a drive shaft 17 is rotatably supported by the front housing member 13. The other end (rear end) of the drive shaft 17 is rotatably supported by the cylinder block 12. The drive shaft 17 extends frontward and rearward in the housing 11 of the compressor 10 and through the crank chamber 16.

The drive shaft 17 is connected to a drive source of the vehicle, which is an engine (internal combustion engine) E in this embodiment, through a power transmission mechanism PT. The power transmission mechanism PT is a clutchless mechanism that includes, for example, a belt and a pulley. In other words, the power transmission mechanism PT does not have a clutch mechanism (for example, an electromagnetic clutch) that selectively transmits and disconnects power with external electric control. The power transmission mechanism PT therefore constantly transmits power. Therefore, when the engine E is running, the drive shaft 17 constantly receives power from the engine E and rotates around an axis L.

A substantially disk-shaped rotor 18 is accommodated in the crank chamber 16. The rotor 18 is fixed to the drive shaft 17 to rotate integrally with the drive shaft 17. A swash plate guiding member 19, which is made of an iron-based metal, is accommodated in the crank chamber 16. The guiding member 19 is located rearward of the rotor 18. A boss 19a is formed on a center of the rear side of the guiding member 19. A shaft receiving hole 19b is formed in a central portion of the guiding member 19 (including the boss 19a). The drive shaft 17 extends through the shaft receiving hole 19b and supports the guiding member 19 such that the guiding member 19 slides back and forth along the axis L of the drive shaft 17 and that the inclination angle of the guiding member 19 is variable.

Specifically, the inclination angle of the guiding member 19 relative to the drive shaft 17 refers to an angle defined by an imaginary plane perpendicular to a central axis M of the guiding member 19 or a central axis M of the boss 19a, and an imaginary plane perpendicular to the axis L of the drive shaft 17.

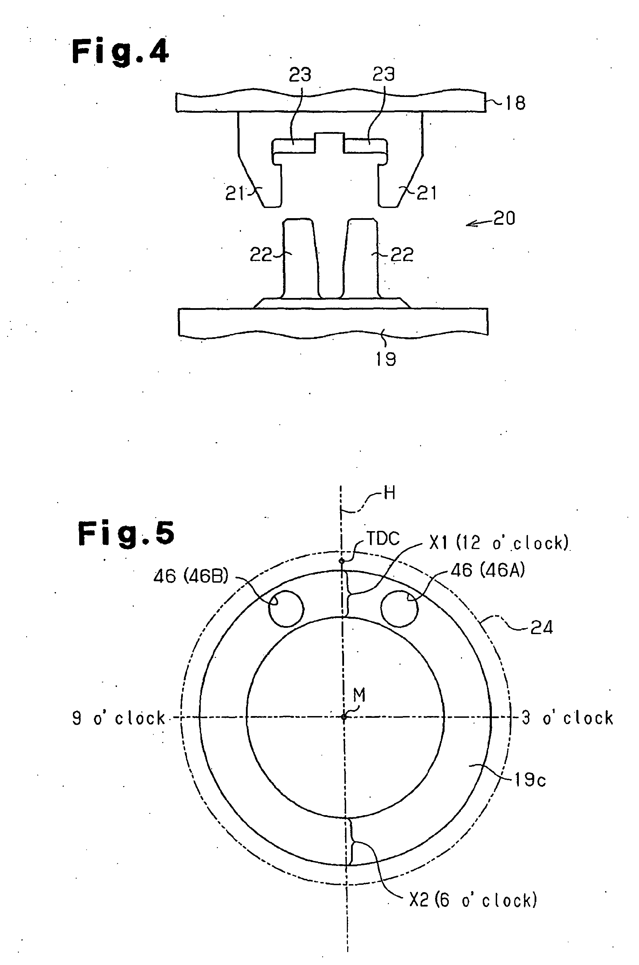

As shown in Figs. 1 and 4, the rotor 18 is connected to the guiding member 19 with a hinge mechanism 20. The hinge mechanism 20 is of a "pinless type". The hinge mechanism 20 has a pair of driving projections 21 protruding from the rear side of the rotor and a pair of driven projections 22 protruding toward the rotor 18 from the front side of the guiding member 19. The driven projections 22 are located between the driving projections 21. A cam surface 23 is formed at the proximal portion of each driving projection 21. The distal end of the corresponding one of the driven projection 22 slidably contacts each cam surface 23.

The hinge mechanism 20 thus constructed permits rotation force of the rotor 18 to be transmitted to the guiding member 19 through one of the driving projections 21 and one of the driven projections 22 that contacts the driving projection 21. In a state where the distal ends of the driven projections 22 contact the cam surfaces 23, when the distal ends of the driven projections 22 move away from the drive shaft 17, the inclination angle of the guiding member 19 relative to the axis L of the drive shaft 17 is increased. In contrast, when the distal ends of the driven projections 22 move toward the drive shaft 17, the inclination angle of the guiding member 19 relative to the axis L of the drive shaft 17 is decreased.

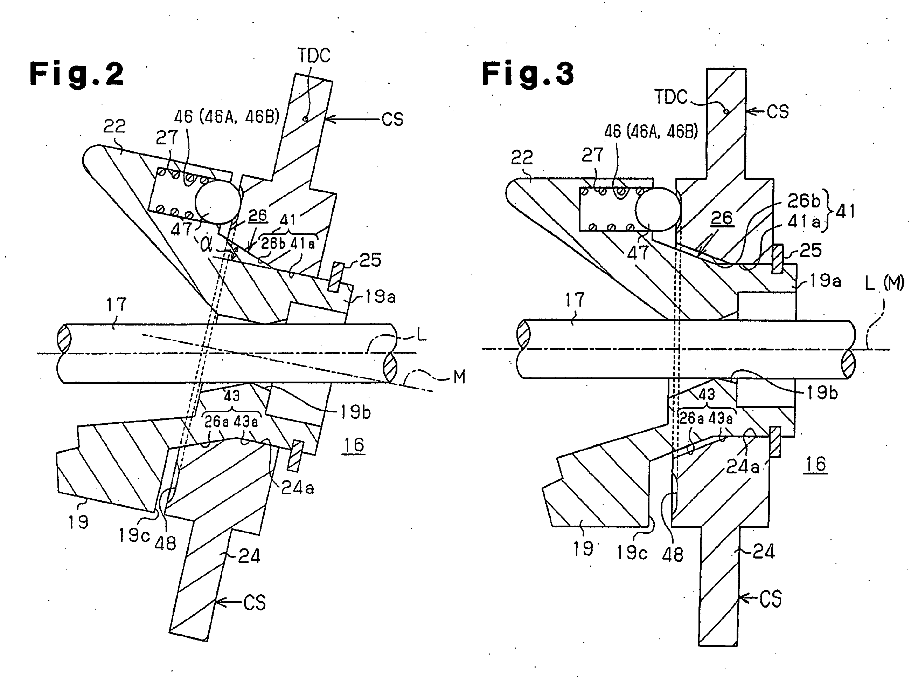

As shown in Figs. 1 and 2, a disk-shaped swash plate 24 is accommodated in the crank chamber 16. From the viewpoint of the sliding property with the guiding member 19, the swash plate 24 is made of a material different from that of the guiding member 19, for example,' of a copper-based metal. A boss receiving hole 24a is formed in a center portion of the swash plate 24. In a section of an inner circumferential surface 41 of the boss receiving hole 24a that corresponds to the cylinder block 12 (rear portion), a constant diameter portion 41a is formed. In a section of an outer circumferential surface 43 of the boss 19a that corresponds to the cylinder block 12 (rear portion), a constant diameter portion 43a is formed. The boss receiving hole 24a of the swash plate 24 receives the boss 19a of the guiding member 19. The swash plate 24 is supported such that the constant diameter portion 41a of the boss receiving hole 24a rotates relative to the constant diameter portion 43a of the boss 19a substantially around the central axis M of the boss 19a, or around the central axis M of the swash plate 24 (the boss receiving hole 24a), and that the constant diameter portion 41a slides on the constant diameter portion 43a back and forth along a direction of the central axis M.

A slide limiting surface 19c is formed on the guiding member 19 in an area surrounding the' proximal portion of the boss 19a. The limiting surface 19c is formed planar and annular shape. The limiting surface 19c lies in an imaginary plane perpendicular to the central axis M of the guiding member 19. Also, a snap ring 25 as a slide limiter is attached to the guiding member 19 at a distal end (rear end) of the boss 19a, which protrudes from the boss receiving hole 24a of the swash plate 24 toward the cylinder block 12.

Therefore, the swash plate 24 slides along the central axis M in a range defined by the limiting surface 19c and the snap ring 25. The swash plate 24 is supported by the boss 19a and prevented from being coming off the boss 19a by the snap ring 25. The swash plate 24 is inclined together with the guiding member 19 so that the inclination angle with respect to the drive shaft 17 (substantially the same as the inclination angle of the guiding member 19 with respect to the drive shaft 17) can be changed.

As shown in Fig. 1, cylinder bores 28 are formed in the cylinder block 12 at constant angular intervals around the axis L of the drive shaft 17. Each cylinder bore 28 extends through the cylinder block 12 from the end face corresponding to the front housing member 13 (front end face) to the end face corresponding to the rear housing member 14 (rear end face). A part of each piston 29 (a rear part that is located at the end corresponding to the rear housing member and is referred to as a "head") is accommodated in the corresponding one of the cylinder bores 28. Each piston 29 is held by the corresponding cylinder bore 28, or by the cylinder block 12, so that the piston 29 approaches and separates from the front end face (end face corresponding to the cylinder block 12) of the valve assembly 15.

The openings of each cylinder bore 28 are closed by the front end face of the valve assembly 15 and the corresponding piston 29. In this manner, an enclosed space exists in each cylinder bore, which will be referred to as a compression chamber 30 below. Each compression chamber 30 is an enclosed space defined in the corresponding cylinder bore 28. The volume of each compression chamber 30 is changed as the corresponding piston 29 slides in the cylinder bore 28.

A suction chamber 32 and a discharge chamber 33 are defined by the rear end face of the valve assembly 15 and the inner side (inner surface) of the rear housing member 14 in the housing 11. The valve assembly 15 has suction ports 34, which connect the compression chambers 30 with the suction chamber 32 to permit flow of refrigerant gas between the compression chambers 30 and the suction chamber 32. The valve assembly 15 also has suction valve flaps 35, each of which corresponds to one of the compression chambers 30 and opens and closes the corresponding suction port 34. The valve assembly 15 also has discharge ports 36, which connect the compression chambers 30 with the discharge chamber 33 to permit flow of refrigerant gas between the compression chambers 30 and the discharge chamber 33. The valve assembly 15 also has discharge valve flaps 37, each of which corresponds to one of the compression chambers 30 and opens and closes the corresponding discharge port 36.

An end of each piston 29 that protrudes into the crank chamber 16 (front end portion, which is opposite to the head) is coupled to a peripheral portion of the swash plate 24 with a pair of semispherical shoes 31. Rotation of the guiding member 19 is converted into reciprocation of the pistons 29 by the swash plate 24 and the shoes 31. Reciprocation of the pistons 29 changes the volume of the compression chambers 30. When each piston 29 moves from the top dead center to the bottom dead center, refrigerant gas in the suction chamber 32 is drawn into the corresponding compression chamber 30 through the suction ports 34 and the opened suction valve flap 35. Refrigerant gas drawn into each compression chamber 30 is compressed to a predetermined pressure as the piston 29 is moved from the bottom dead center to the top dead center. Then, the refrigerant gas is discharged to the discharge chamber 33 through the corresponding discharge port 36 and the opened discharge valve flap 37.

The inclination angle of the guiding member 19 and the swash plate 24 is determined by the equilibrium of various moments, such as the rotational moment caused by centrifugal force generated when the guiding member 19 (or the guiding member 19 and the swash plate 24) rotates, the moment caused by reciprocation inertial force of the pistons 29, and the moment of gas pressure acting on the front and rear end faces of the pistons 29. The moment caused by gas pressure refers to the moment generated based on the relationship between the inner pressure of the compression chambers 30 and the inner pressure of the crank chamber 16, which corresponds to a back pressure of the pistons 29. The gas pressure moment acts to either decrease or increase the inclination angle. A configuration for controlling the inner pressure of the crank chamber 16 will now be described.

The housing 11 has a bleed passage 38, a supply passage 39, and a control valve 40. The bleed passage 38 connects the crank chamber 16 with the suction chamber 32 so that refrigerant gas flows therebetween. The supply passage 39 connects the discharge chamber 33 with the crank chamber 16 so that refrigerant gas flows therebetween. The control valve 40 is located in the supply passage 39 to adjust the opening degree of the supply passage 39.

The control valve 40 has a conventional configuration that permits the opening degree of the supply passage 39 to be externally controlled with electricity. The control valve 40 includes an electromagnetic actuator 40a and a valve body 40b. Electromagnetic force generated by the actuator 40a is related to the position of the valve body 40b. Based on a command of a control computer 60 in accordance with the cooling load and the driving condition of the vehicle, a drive circuit 61 supplies electricity to the electromagnetic actuator 40a. When the electricity supplied to the electromagnetic actuator 40a is increased, the control valve 40 decreases the opening degree of the supply passage 39. When the electricity supplied to the electromagnetic actuator 40a is decreased, the control valve 40 increases the opening degree of the supply passage 39. When no electricity is supplied to the electromagnetic actuator 40a, the control valve 40 maximizes the opening degree of the supply passage 39.

By adjusting its opening, the control valve 40 controls the ratio between the flow rate of refrigerant gas (highly pressurized gas) drawn to the crank chamber 16 from the discharge chamber 33 through the supply passage 39, and the flow rate of refrigerant gas supplied to the suction chamber 32 from the crank chamber 16 through the bleed passage 38, thereby determining the inner pressure of the crank chamber 16. In accordance with the inner pressure of the crank chamber 16 which is adjusted, in this manner, the difference between the inner pressure of the crank chamber 16 and the inner pressure of the compression chambers 30 with the pistons 29 in between is changed. Accordingly, the force applied to the swash plate 24 and the guiding member 19 by the pistons 29 is changed. This, in turn, changes the inclination angle of the guiding member 19 and the swash plate 24. As a result, the stroke of each piston 29, that is, the displacement of the compressor 10, is controlled. Specifically, the displacement of the compressor 10 is controlled in the following manner.

When the inner pressure of the crank chamber 16 is lowered as the opening degree of the control valve 40 (the supply passage 39) is reduced, the inclination angle of the guiding member 19 and the swash plate 24 is increased. This lengthens the stroke of each piston 29 and the displacement of the compressor 10 is increased, accordingly. In contrast, when the inner pressure of the crank chamber 16 is increased as the opening degree of the control valve 40 is increased, the inclination angle of the guiding member 19 and the swash plate 24 is decreased. This shortens the stroke of each piston 29 and the displacement of the compressor 10 is decreased, accordingly. When the opening degree of the control valve 40 is maximized, the inclination angle of the guiding member 19 and the swash plate 24 is minimized (zero degrees or an minute angle close to zero degrees, for example, an angle in a range between 0° and approximately 3°). In this state, the displacement of the compressor 10 is minimized (see Fig. 3).

When an occupant commands to turn off the air conditioning (for example, turns an air conditioner switch (not shown) off), or when the vehicle is rapidly accelerated (for example, when an acceleration pedal (not shown) is depressed by an degree greater than a predetermined amount), the control computer 60 commands the drive circuit 61 to stop supplying electricity to the control valve 40. Therefore, the opening degree of the control valve 40 is maximized and the displacement of the compressor 10 is minimized. That is, the compressor 10 is in an "OFF operation". Accordingly, the load on the engine E (load for driving the compressor 10) is reduced. Thus, for example, the fuel economy of the engine E and the acceleration performance of the vehicle are improved.

As shown in Figs. 1 to 3, a clutch 26 is located between the guiding member 19 and the swash plate 24. The clutch 26 switches between an engaged state to cause the guiding member 19 and the swash plate 24 to rotate integrally, and a disengaged state to permit the guiding member 19 and the swash plate 24 to rotate relative to each other. The clutch 26 will now be described.

The clutch 26 is a cone clutch, which is a friction clutch. The clutch 26 includes a driving clutch surface 26a and a driven clutch surface 26b. The driving clutch surface 26a is located on an outer circumferential surface 43 of the boss 19a of the guiding member 19 and forms part of the outer circumferential surface 43. The driven clutch surface 26b is located on an inner circumferential surface 41 of the boss receiving hole 24a of the swash plate 24 and forms part of the inner circumferential surface 41.

The driving clutch surface 26a is adjacent (connected) to the constant diameter portion 43a at a front portion as viewed in a direction along the central axis M of the boss 19a (the proximal portion of the boss 19a). The driving clutch surface 26a is shaped as a cone with a central axis coinciding with the central axis M. Specifically, a section of the driving clutch surface 26a that is closer to the constant diameter portion 43a (a section corresponding to the distal end of the boss 19a) has a smaller diameter. A section of the driving clutch surface 26a that corresponds to the proximal portion of the boss 19a has a larger diameter. The boundary between the driving clutch surface 26a and the constant diameter portion 43a is machined to form a concave surface so that the constant diameter portion 43a is smoothly connected to the driving clutch surface 26a. This prevents stress being concentrated on the boundary.

The driven clutch surface 26b is adjacent (connected) to the constant diameter portion 41a at a front portion as viewed in a direction along the central axis M of the swash plate 24 (the proximal portion of the boss 19a). The driven clutch surface 26b is shaped as a cone with a central axis coinciding with the central axis M. Specifically, a section of the driven clutch surface 26b that is closer to the constant diameter portion 41a (a section corresponding to the distal end of the boss 19a) has a smaller diameter. A section of the driven clutch surface 26b that corresponds to the proximal portion of the boss 19a has a larger diameter. The boundary between the driven clutch surface 26b and the constant diameter portion 41a is machined to be a convex surface so that the boundary does not contact the outer circumferential surface 43 in its edge.

To permit the clutch 26 to operate in a favorable manner (for example, to provide the clutch 26 in a narrow space between the boss 19a and the boss receiving hole 24a while securing a sufficient clutch capacity), the angle a (see Fig. 2) of the driving clutch surface 26a and the driven clutch surface 26b relative to the central axis M is set preferably in a range between 5° and 20°, more preferably in a range between 10° and 15°.

When the swash plate 24 slides relative to the guiding member 19 in a direction along the central axis M, the driven .clutch surface 26b of the clutch 26 approaches or separates from the driving clutch surface 26a. A state in which the driven clutch surface 26b contacts the driving clutch surface 26a is the engaged state of the clutch 26. When the clutch 26 is engaged, rotational force of the guiding member 19 is transmitted to the swash plate 24 substantially at 100%, which causes the swash plate 24 to rotate integrally with the guiding member 19 (see Fig. 2).

A state in which the driven clutch surface 26b is away from the driving clutch surface 26a is the disengaged state of the clutch 26. When the clutch 26 is disengaged, little or no rotational force of the guiding member 19 is transmitted to the swash plate 24, which permits the swash plate 24 and the guiding member 19 to rotate relative to each other. In other words, the swash plate 24 slips on the guiding member 19 (see Fig. 3).

That is, the clutch 26 is switched from the disengaged state of Fig. 3 to the engaged state of Fig. 2 when the swash plate 24 slides on the guiding member 19 in one direction (towards the limiting surface 19c) along the central axis M. Also, the clutch 26 is switched from the engaged state of Fig. 2 to the disengaged state of Fig. 3 when the swash plate 24 slides on the guiding member 19 in the other direction (towards the cylinder block 12) along the central axis M.

When the clutch 26 is switched from the disengaged state to the engaged state, the swash plate 24 is slid by compression reaction force CS acting on the swash plate 24 through the pistons 29 as refrigerant gas is compressed. Also, when the clutch 26 is switched from the engaged state to the disengaged state, the swash plate 24 is slid by force (urging force) of the coil springs 27 located between the guiding member 19 and the swash plate 24. Hereinafter, springs 27 and the structure including the spring 27 will be described.

As shown in Fig. 2, spring holes 46 (only one is shown in Fig. 2) for accommodating the spring 27 are formed in the limiting surface 19c of the guiding member 19. The transverse cross section of the spring hole 46 is substantially circular. The axis of the circle of the hole 46 is parallel to the central axis M of the guiding member 19. As shown in Fig. 5, a portion on the swash plate 24 that corresponds to a top dead center is denoted as TDC, which portion coincides with a center point of the curvature of the shoes 31 corresponding to the piston 29 at the top dead center. An imaginary plate containing the top dead center portion TDC and the central axis M of the swash plate 24 is denoted as an imaginary plane H. One of the spring holes 46 (spring hole 46A) is located in one of the areas of the swash plate 24 divided by the imaginary plane H (a right area as viewed in the drawing). The other spring hole 46 (spring hole 46B) is located in the other area (left area as viewed in the drawing). The spring hole 46A and the spring hole 46B are symmetrical with respect to the imaginary plane H.

Specifically, the state of Fig. 5, or the state when the limiting surface 19c is viewed from the front, is regarded as a dial of a clock (in other words, the central axis M is regarded as the axis of a clock). Sections of lines at intersections of the annular limiting surface 19c and the imaginary plane H are referred to as line sections X1, X2. The line section X1, which is located at the side of the top dead center portion TDC of the swash plate 24 (upper side as viewed in the drawing), corresponds to twelve o'clock. The line section X2, which is located at a side opposite from the top dead center portion TDC (lower side as viewed in the drawing), corresponds to six o'clock.

The spring hole 46A (specifically the center of the opening of the spring hole 46A) is located in a range from twelve o' clock to three o' clock in the clockwise direction on the limiting surface 19c (preferably in a range from one o' clock to two o' clock). Also, the spring hole 46B (specifically the center of the opening of the spring hole 46B) is located in a range from nine o'clock to twelve o'clock in the clockwise direction on the limiting surface 19c (preferably in a range from ten o'clock to eleven o' clock). That is, the springs 27 accommodated in the spring holes 46A, 46B are arranged to apply force in a concentrated and intense manner to an area near the top dead center portion TDC on the swash plate 24 around the central axis M. At the area, the compression reaction force CS acts strongly.

As shown in Fig. 2, a ball 47, which functions as bearing and a thrust bearing, is held by each of the spring holes 46A, 46B. Each ball 47 is urged toward the swash plate 24 by the force of the corresponding spring 27. Part of each ball 47 projects from the spring hole 46A, 46B, or from the limiting surface 19c, toward the swash plate 24. Around the opening of the boss receiving hole 24a on the front face of the swash plate 24, a roll groove 48 is formed to correspond to the limiting surface 19c of the guiding member 19. The roll groove 48 is formed annular around the central axis M. The transverse cross section of the roll groove 48 is substantially semicircular.

As described above, each ball 47,which is urged by the corresponding spring 27, contacts the inner surface of the roll groove 48. That is, each spring 27 applies its force to the swash plate 24 through the corresponding ball 47 and the inner surface of the roll groove 48. Also, when the guiding member 19 and the swash plate 24 rotate relative to each other in the disengaged state of the clutch 26, the balls 47 roll on the inner surface of the roll groove 48 along the circumferential direction of the roll groove 48. That is, the balls 47 are located between the springs 27 and the swash plate 24, which rotates relative to the guiding member 19 in the disengaged state of the clutch 26.

Switching of the clutch 26 will now be described.

In a state shown in Fig. 3, that is, when the compressor 10 is in the OFF operation, the stroke of the pistons 29 is zero or a value close to zero. Therefore, the compression reaction force CS applied to the swash plate 24 through the pistons 29 is less than a predetermined value. In this state, the force of the springs 27 acts dominantly to determine the position of the swash plate 24 relative to the guiding member 19 (the boss 19a) in a direction along the central axis M.

Therefore, the swash plate 24 is moved by the force of the springs 27 to a position contacting the snap ring 25 against the compression reaction force CS, the clutch 26 is caused to the disengaged state. In this state, the swash plate 24 and the guiding member 19 rotate relative to each other. That is, the swash plate 24 slips on the guiding member 19, and the rotation speed of the swash plate 24 is lower than the rotation speed of the guiding member 19. As a result, the mechanical loss between the swash plate 24 and the shoes 31 is further reduced. Accordingly, the load of the compressor 10, which acts on the engine E, is further reduced.

Since the load of the compressor 10 on the engine E is further reduced, the fuel economy of the engine E and the acceleration performance of the vehicle are further improved. Also, since the generation of frictional heat at contacting portions of the swash plate 24 and the shoes 31 is suppressed, a lip seal for sealing an end portion of the drive shaft 17 and a bearing supporting the shaft end portion are prevented from being degraded by heat. This improves the reliability of the compressor 10.

In the OFF operation state of the compressor 10, the swash plate 24 is slightly inclined relative to the axis L of the drive shaft 17, and the pistons 29 are reciprocated with a very small stroke. This causes refrigerant gas to be discharged to the discharge chamber 33 from the compression chambers 30. The refrigerant gas is then supplied to the crank chamber 16 from the discharge chamber 33 through the supply passage 39 and the control valve 40. The refrigerant gas in the crank chamber 16 is supplied to the suction chamber 32 through the bleed passage 38, and then drawn into the compression chambers 30 from the suction chamber 32. In this manner, when the compressor 10 is in the OFF operation, refrigerant gas circulates within the compressor 10 and passes through the control valve 40.

If the opening degree of the control valve 40 is less than the fully opened state (by starting the supply of electricity to the electromagnetic actuator 40a of the control valve 40), the flow rate of refrigerant gas supplied to the crank chamber 16 is decreased. Accordingly, the compression reaction force CS is relatively increased. Also, when the flow rate of refrigerant gas supplied to the crank chamber 16 decreases, the inclination angle of the swash plate 24 is increased, so that the displacement of the compressor 10 is increased from the minimum displacement (leaves the OFF operation and shifts to "an ON operation"). Therefore, the compression reaction force CS applied to the swash plate 24. is greater than the predetermined value. In this state, the compression reaction force CS acts dominantly to determine the position of the swash plate 24 relative to the guiding member 19 (the boss 19a) in a direction along the central axis M.

Accordingly, the swash plate 24 is moved by the compression reaction force CS to a position where the driven clutch surface 26b contacts the driving clutch surface 26a against to the force of the springs 27. This engages the clutch 26, and the swash plate 24 and the guiding member 19 start rotate integrally. If the opening degree of the control valve 40 is changed in a state where the swash plate 24 and the guiding member 19 rotate integrally, that is, in the on operating state of the compressor 10, the inclination angle of the guiding member 19 and the swash plate 24 is changed.

At this time, since centrifugal force acts on the guiding member 19 and the swash plate 24 which rotates integrally with the guiding member 19, the inertial force due to reciprocation of the pistons 29 is cancelled. This permits the inclination angle of the guiding member 19 and the swash plate 24 to be easily changed. Particularly, when the compressor 10 is operating at a high speed (when the drive shaft 17 is rotating at a high speed), that is, the inertial force of the pistons 29 is great, the advantage of facilitating changes in the inclination angle of the guiding member 19 and the swash plate 24 is remarkable.

When the control valve 40 is fully opened during the ON operation of the compressor 10 (when the supply of electricity to the electromagnetic actuator 40a of the control valve 40 is stopped), the compressor 10 shifts to the OFF operation and the clutch 26 is disengaged.

The above embodiment provides the following advantages.
(1) As described above, engaging the clutch 26 improves the displacement control performance of the compressor 10, and disengaging the clutch 26 reduces the mechanical loss between the swash plate 24 and the shoes 31. Therefore, when, for example, designing the compressor 10, the dilemma accompanying the prior art is avoided.
(2) The boss 19a of the guiding member 19 supports the swash plate 24 at the boss receiving hole 24a. The swash plate 24, which receives the boss 19a at the boss receiving hole 24a formed in the center portion of the swash plate 24, is stably supported by the boss 19a. This permits the swash plate 24 to smoothly slide in a direction along the central axis M.
(3) When the clutch 26 is switched from the disengaged state to the engaged state, the swash plate 24 is slid by compression reaction force CS acting on the swash plate 24 through the pistons 29 as refrigerant gas is compressed. Therefore, the clutch 26 is automatically switched from the engaged state to the disengaged state and from the disengaged state to the engaged state according to the operating condition of the compressor 10. Therefore, no special external control means for directly controlling the clutch 26 is required. This simplifies the structure of the compressor 10.
(4) When the clutch 26 is switched from the engaged state to the disengaged state, the swash plate 24 is slid by the force of the springs 27. Therefore, when in the engaged state, the clutch 26 is reliably switched to the disengaged state by the force of the springs 27.
(5) The balls (bearing, thrust bearings) 47 are located between the guiding member 19 and the swash plate 24. The balls 47 support the swash plate 24 such that the swash plate 24 is rotatable relative to the guiding member 19. Therefore, when the guiding member 19 and the swash plate 24 rotate relative to each other, that is, when the clutch 26 is in the disengaged state, the mechanical loss between the guiding member 19 and the swash plate 24 is further reduced.
(6) The balls 47 (bearing, a thrust bearing) are located between the springs 27 and the swash plate 24, which rotates in the disengaged state of the clutch 26. Therefore, when the guiding member 19 and the swash plate 24 rotate relative to each other, that is, when the clutch 26 is in the disengaged state, the mechanical loss between the swash plate 24 and the springs 27 is further reduced. This further reduces the load of the compressor 10 acting on the engine E.
(7) The roll groove 48, in which the balls 47 roll, is formed on the swash plate 24. The roll groove 48 has a semicircular transverse cross-section. Therefore, compared to a case where balls roll on a flat surface of a swash plate, the surface pressure between each ball 47 and a section of the roll groove 48 contacting the ball 47 is small. As a result, the mechanical loss between the swash plate 24 and the springs 27 is further effectively reduced. Accordingly, the load of the compressor 10, which acts on the engine E, is further reduced.
(8) The springs 27 are configured to apply force in a concentrated and intense manner to an area near the top dead center portion TDC on the swash plate 24 around the central axis M. That is, in the area of the swash plate 24 near the top dead center portion TDC receives the compression reaction force CS in a concentrated and intense manner. Therefore, when the swash plate 24 slides as the clutch 26 is switched from the engaged state to the disengaged state, the movement of the top dead center portion TDC of the swash plate 24 is hindered by the strong compression reaction force CS compared to other portions. Also, when the swash plate 24 slides as the clutch 26 is switched from the disengaged state to the engaged state, the top dead center portion TDC of the swash plate 24 is excessively moved by the strong compression reaction force CS compared to other portions. That is, since the compression reaction force CS acts on the top dead center portion TDC in a concentrated manner, the inclination of the swash plate 24 relative to the central axis M is facilitated when the swash plate 24 is sliding.
   Therefore, if the force of the springs 27 is controlled to act on the top dead center portion TDC in a concentrated manner against the strong compression reaction force CS as in the above embodiment, the sliding attitude of the swash plate 24 is stabilized (the swash plate 24 is prevented from being inclined relative to the central axis M). This permits the swash plate 24 to smoothly slide; and thus permits the clutch 26 to smoothly and reliably switch the state.
(9) The clutch 26 is in the engaged state when the driving clutch surface 26a formed on the guiding member 19 contacts the driven clutch surface 26b formed on the swash plate 24. Therefore, no medium connecting the driving clutch surface and the driven clutch surface is required (for example, an electromagnetic powder clutch uses powder as the medium). Therefore, the structure of the clutch 26 is simplified and its size is reduced.
(10) The driving clutch surface 26a is formed on the outer circumferential surface 43 of the boss 19a, and the driven clutch surface 26b is formed on the inner circumferential surface 41 of the boss receiving hole 24a.. That is, part of the outer circumferential surface 43 of the boss 19a is used as the driving clutch surface 26a, and part of the inner circumferential surface 41 of the boss receiving hole 24a is used as the driven clutch surface 26b. Thus, for example, when compared to a case where the driving clutch surface 26a and the driven clutch surface 26b are located outside of the boss receiving hole 24a, that is, when compared to a case where the driving clutch surface 26a and the driven clutch surface 26b are independently formed, the structure of the guiding member 19 and the swash plate 24 is simplified and the size is reduced.
(11) The clutch 26 is a friction clutch. Thus, the shapes of the driving clutch surface 26a and the driven clutch surface 26b are simple, which simplifies the structure of the clutch 26. Also, a little sliding of the swash plate 24 relative to the guiding member 19 permits the clutch 26 to switch between the engaged state and the disengaged state. Therefore, the sliding of the swash plate 24 does not adversely affects the efficiency of the compressor 10. For example, the top clearance (the distance'between a piston 29 at the top dead center and the valve assembly 15), which degrades the efficiency of the compressor 10 when the top clearance is increased, is not increased. Further, the size of the compressor 10 is reduced.
   During the ON operation of the compressor 10, adhesion between the swash plate 24 and the shoes 31 increases the torque required for rotating the swash plate 24. In this case, the clutch 26, which is a friction clutch, exerts a torque limiting function and slips the driving clutch surface 26a and the driven clutch surface 26b on each other.
   Therefore, the swash'plate 24 is not forced to rotate when the swash plate 24 receives an excessive torque, so the belt and other members of the power transmission mechanism PT are not damaged. Therefore, the power transmission mechanism PT does not need to have a dedicated torque limiter, which simplifies the structure of the compressor 10.
(12) The clutch 26 is a cone clutch. Even if the radial size of the cone clutch is reduced, a large area is secured for the driving clutch surface 26a and the driven clutch surface 26b.. Therefore, as in the above embodiment, it is possible to form the driving clutch surface 26a on the outer circumferential surface 43 of the boss 19a and the driven clutch surface 26b on the inner circumferential surface 41 of the boss receiving hole 24a, and to secure a great capacity of the clutch 26.

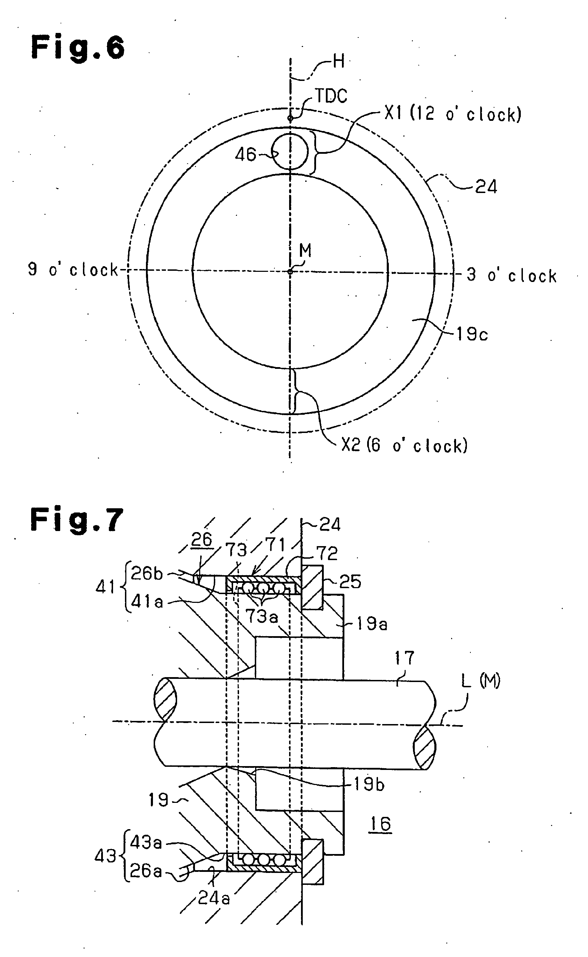

   Fig. 6 illustrates a compressor according to a second embodiment, which is a modification of the first embodiment.
   Hereafter, only the components different from those of the compressor according to the first embodiment are explained. The same, equivalent, or similar components are given the same numbers and detailed explanations are omitted.
   The compressor of the second embodiment is the same as the compressor of the first embodiment except that the compressor of the second embodiment has one spring hole 46, one spring 27, and one ball 47. The spring hole 46 is arranged such that the central axis of the spring hole 46 is located on the imaginary plane H. That is, the spring hole 46 (specifically, the center of the opening of the spring hole 46) corresponds to twelve o'clock on the limiting surface 19c of the guiding member 19.
   The spring hole 46 may be misaligned clockwise or counterclockwise from twelve o' clock. Particularly, if the drive shaft 17 rotates clockwise as viewed in Fig. 6, the spring hole 46, or the spring 27 accommodated in the spring hole 46, is preferably provided in a range from twelve o'clock to three o'clock in the clockwise direction, where the compression reaction force CS strongly acts (more preferably in a range from one o'clock to two o'clock in the clockwise direction). In contrast, if the drive shaft 17 rotates counterclockwise as viewed in Fig. 6, the spring hole 46, or the spring 27 accommodated in the spring hole 46, is preferably provided in a range between nine o'clock to twelve o'clock in the clockwise direction, where the compression reaction force CS strongly acts (preferably in a range from ten o'clock to eleven o'clock in the clockwise direction).
   The compressor according to the second embodiment has the same advantages (1) to (12) of the compressor according to the first embodiment. In addition, the compressor according to the second embodiment provides the following advantage (13).
(13) Since the number of each of the spring hole 46, the spring 27, and the ball (bearing, thrust bearing) 47 is one, the structure of the compressor 10 is simplified.

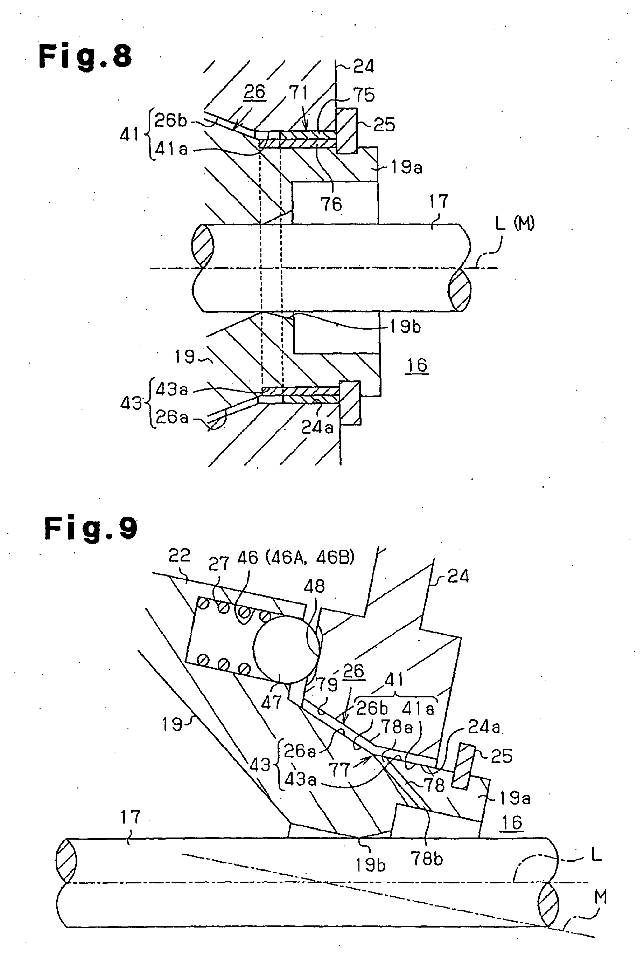

   Fig. 7 illustrates a compressor according to a third embodiment, which is a modification of the first embodiment. Fig. 8 illustrates a compressor according to a fourth embodiment, which is a modification of the first embodiment.
   The compressors according to the third and fourth embodiments are the same as the compressor according to the first embodiment except that a radial bearing 71 is located between the guiding member 19 and the swash plate 24. The radial bearing 71 supports the swash plate 24 such that the swash plate 24 rotate relative to the guiding member 19 around the central axis M and slides in a direction along the central axis M.
   Particularly, in the compressor according to the third embodiment (Fig. 7), the radial bearing 71 is a linear ball bearing. The linear ball bearing includes an outer ring 72 and a ball holder 73. The outer ring 72 is fixed to the constant diameter portion 41a of the boss receiving hole 24a, for example, by press fitting. The ball holder 73 is located inside of the outer ring 72 and holds two or more circumferential rows of balls 73a. Each ball 73a in the ball holder 73 contacts the inner circumferential surface of the outer ring 72 and the constant diameter portion 43a of the outer circumferential surface 43 of the boss 19a. Free rolling of the balls 73a permits the guiding member 19 and the swash plate 24 to rotate relative to each other and slide in a direction along the central axis M relative to each other.
   In the compressor according to the fourth embodiment (Fig. 8), the radial bearing 71 is a plain bearing. The plain bearing includes an outer cylinder 75 and an inner cylinder 76. The outer cylinder 75 is fixed to the constant diameter portion 41a of the inner circumferential surface 41 of the boss receiving hole 24a, for example, by press fitting. The inner cylinder 76 is fixed to the constant diameter portion 43a of the outer circumferential surface 43 of the boss 19a, for example, by press fitting. The outer cylinder 75 and the inner cylinder 76 are both made of material having a superior sliding property. Relative rotation and movement in the axial direction of the outer cylinder 75 and the inner cylinder 76, or relative rotation and relative sliding in a direction along the central axis M of the guiding member 19 and the swash plate 24 are smoothly performed.
   The compressors according to the third and fourth embodiments have the same advantages (1) to (12) of the compressor according to the first embodiment. In addition, the compressors according to the third and fourth embodiments provide the following advantage (14).
(14) The radial bearing 71 further reduces the mechanical loss between the guiding member 19 and the swash plate 24 when the clutch 26 is in the disengaged state. For example, the load of the compressor that acts on the engine E is further reduced. Further, when the clutch 26 is switched, the swash plate 24 is slid smoothly. Further, when the clutch 26 performs torque limiting or is in the disengaged state, the outer circumferential surface 43 of the boss 19a and the inner circumferential surface 41 of the boss receiving hole 24a are prevented from being worn.
   Fig. 9 illustrates a compressor according to a fifth embodiment, which is a modification of the first embodiment.
   The compressor of the fifth embodiment is the same as the compressor of the first embodiment except that the compressor of the fifth embodiment has oil supply portion 77. The oil supply portion 77 supplies lubricant oil (refrigeration oil) to a space between the guiding member 19 and the swash plate 24 when the guiding member 19 and the swash plate 24 rotate relative to each other. The oil supply portion 77 will now be described.
   The oil supply portion 77 has an oil supply hole 78 formed in the guiding member 19 and a reservoir groove 79 formed on the inner circumferential surface 41 of the boss receiving hole 24a of the swash plate 24. The reservoir groove 79 is linearly formed with a curved part, and extends substantially along the central axis M (in a direction frontward and backward). The reservoir groove 79 extends from the constant diameter portion 41a to the driven clutch surface 26b. The oil supply hole 78 has an outlet 78a of lubricant oil. The outlet 78a opens to (is connected to) the reservoir groove 79 on the outer circumferential surface 43 of the boss 19a. The oil supply hole 78 has an inlet 78b of lubricant oil. The inlet 78b opens to (is connected to) the crank chamber 16 at a position that is closer to the drive shaft 17 than the outlet 78a on the rear side of the guiding member 19. Specifically, the inlet 78b opens to the crank chamber 16 at a position on the inner circumferential surface of the boss 19a.
   Therefore, lubricant oil drawn to the inlet 78b of the oil supply hole 78 from the crank chamber 16 is moved to the outlet 78a, which is farther from the drive shaft 17 than the inlet 78b, by centrifugal force generated as the guiding member 19 rotates. The lubricant oil is then supplied to the reservoir groove 79. The lubricant oil supplied to the reservoir groove 79 spreads (flows) in the groove 79 substantially along the central axis M. Further, as the guiding member 19 and the swash plate 24 rotate relative to each other, the lubricant oil spreads in a wide area.between the outer circumferential surface 43 of the boss 19a and the inner circumferential surface 41 of the boss receiving hole 24a.
   The compressor according to the fifth embodiment has the same advantages (1) to (12) of the compressor according to the first embodiment. In addition, the compressor according to the fifth embodiment provides the following advantages (15) to (19).
(15) The oil supply portion 77 supplies lubricant oil to a space between the guiding member 19 and the swash plate 24 when the guiding member 19 and the swash plate 24 rotate relative to each other. Therefore, when the guiding member 19 and the swash plate 24 rotate relative to each other, that is, when the clutch 26 is performing torque limiting or in the disengaged state, the mechanical loss between the guiding member 19 and the swash plate 24 is further reduced. Further, for example, the load of the compressor that acts on the engine E is reduced.
(16) The oil supply portion 77 supplies lubricant oil to a space between the driving clutch surface 26a and the driven clutch surface 26b when the guiding member 19 and the swash plate 24 rotate relative to each other. Therefore, when the clutch 26 is performing torque limiting or in the disengaged state, the mechanical loss between the driving clutch surface 26a and the driven clutch surface 26b is further reduced. Particularly, when the clutch 26 is performing torque limiting, wear of the driving clutch surface 26a and the driven clutch surface 26b is suppressed.
(17) The oil supply portion 77 supplies lubricant oil to a space between the outer circumferential surface 43 of the boss 19a and the inner circumferential surface 41 of the boss receiving hole 24a when the guiding member 19 and the swash plate 24 rotate relative to each other. Therefore, when the guiding member 19 and the swash plate 24 rotate relative to each other, that is, when the clutch 26 is performing torque limiting or in the disengaged state, the mechanical loss between the outer circumferential surface 43 of the boss 19a and the inner circumferential surface 41 of the boss receiving hole 24a is further reduced. Further, the load of the compressor acting on the engine E is reduced. Further, when the clutch 26 is switched, the swash plate 24 is slid smoothly.
(18) The oil supply portion 77 has the oil supply hole 78. The oil supply hole 78 uses centrifugal force generated when the guiding member 19 rotates to move lubricant oil from the inlet 78b to the outlet 78a. Since lubricant oil is supplied by using centrifugal force, the structure of the oil supply portion 77 is simplified to have only a passage.
(19) The oil supply portion 77 has the reservoir groove 79 to which lubricant oil is supplied from the oil supply hole 78. The reservoir groove 79 is formed on the inner circumferential surface 41 of the boss receiving hole 24a to extend substantially along the central axis M. This permits lubricant oil to spread in an wide area between the outer circumferential surface 43 of the boss 19a and the inner circumferential surface 41 of the boss receiving hole 24a. Therefore, mechanical loss between the outer circumferential surface 43 of the boss 19a and the inner circumferential surface 41 of the boss receiving hole 24a is further effectively reduced.

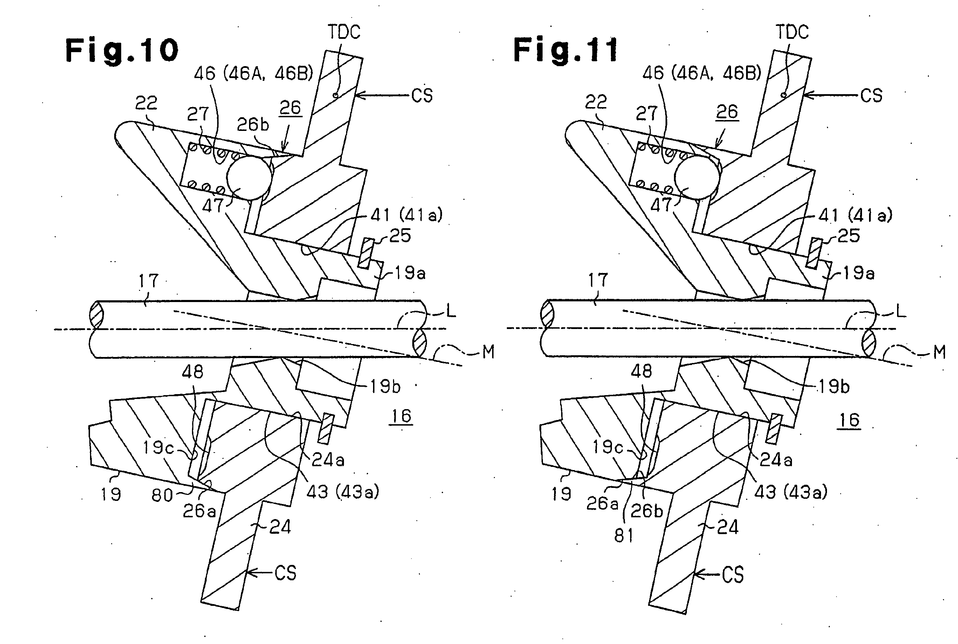

   Fig. 10 illustrates a compressor according to a sixth embodiment, which is a modification of the first embodiment. Fig. 11 illustrates a compressor according to a seventh embodiment, which is a modification of the first embodiment.
   The compressors according to the sixth and seventh embodiments are the same as the compressor according to the first embodiment except that the clutch 26, the driving clutch surface 26a, and the driven clutch surface 26b are located outside of the boss receiving hole 24a. Therefore, almost the entire inner circumferential surface 41 of the boss receiving hole 24a is the constant diameter portion 41a, and almost the entire outer circumferential surface 43 of the boss 19a is the constant diameter portion 43a.
   In the sixth embodiment (Fig. 10), a cylindrical surface forming projection 80 projects from the rear side of the guiding member 19. The surface forming projection 80 is located radially outside of the limiting surface 19c. The inner circumferential surface of the surface forming projection 80 functions as the driving clutch surface 26a. A driven clutch surface 26b is formed in a peripheral portion of the front side of the swash plate 24 that is radially outside of the roll groove 48.
   In the seventh embodiment (Fig. 11), a cylindrical surface forming projection 81 projects from the front side of the swash plate 24. The surface forming projection 81 is located radially outside of the roll groove 48. The inner circumferential surface of the surface forming projection 81 functions as the driven clutch surface 26b. A driving clutch surface 26a is formed in a peripheral portion of the rear side of the guiding member 19 that is radially outside of the limiting surface 19c.
   The compressors according to the sixth and seventh embodiments have the same advantages (1) to (9), (11), and (12) of the compressor according to the first embodiment. In addition, the compressors according to the sixth and seventh embodiments provide the following advantage (20).
(20) The driving clutch surface 26a and the driven clutch surface 26b are located outside of the boss receiving hole 24a. That is, the driving clutch surface 26a is formed separately from the outer circumferential surface 43 of the boss 19a, and the driven clutch surface 26b is formed separately from the inner circumferential surface 41 of the boss receiving hole 24a.
   Therefore, the structure of the clutch 26 (for example, the shapes and the measurements of the driving clutch surface 26a and the driven clutch surface 26b) is not significantly affected by the arrangement, the measurements, and the shapes of the boss 19a (the outer circumferential surface 43) and the boss receiving hole 24a (the inner circumferential surface 41). This adds to the flexibility of design of the clutch 26. Accordingly, a wide area can be easily secured for the area of the driving clutch surface 26a and the driven clutch surface 26b. This increases the capacity of the clutch 26. Increasing the capacity of the clutch 26 reliably suppresses the slipping between the guiding member 19 and the swash plate 24 when the clutch 26 is engaged. This, for example, permits the compressor to maintain a favorable displacement control performance.
   Since the driving clutch surface 26a and the driven clutch surface 26b are located outside the boss receiving hole 24a, substantially the entire inner circumferential surface 41 of the boss receiving hole 24a is used as the constant diameter portion 41a and substantially the entire outer circumferential surface 43 of the boss 19a is used as the constant diameter portion 43a. Therefore, during the OFF operation of the compressor 10, the swash plate 24 is stably supported by the boss 19a. Thus, for example, noise and vibration due to chattering of the swash plate 24 and undesirable fluctuations of stroke of the pistons 29 are suppressed. Further, when the clutch 26 is switched, the swash plate 24 is slid smoothly. That is, switching of the clutch 26 is reliably and smoothly performed.

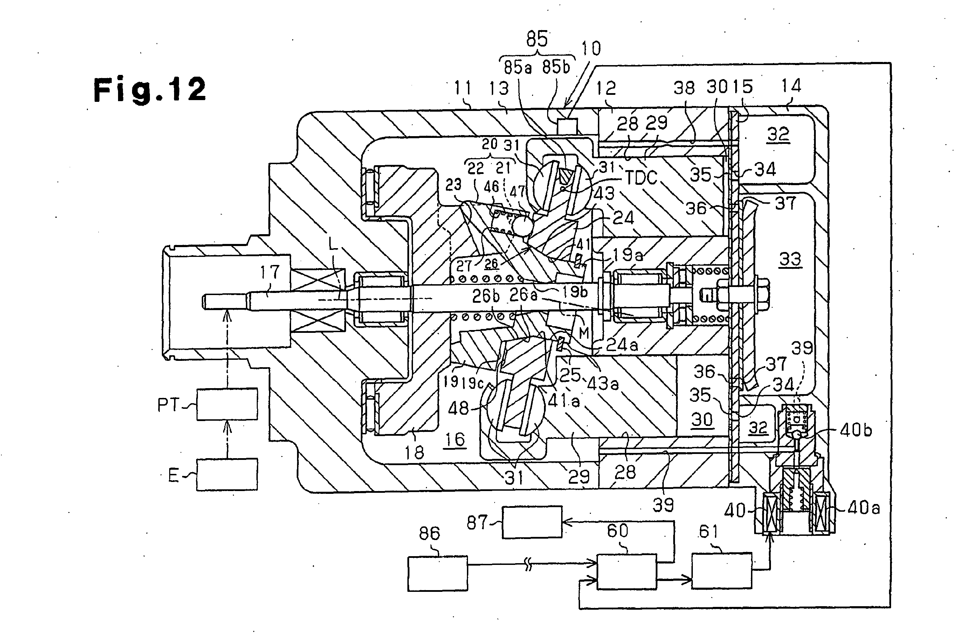

   Fig. 12 illustrates a compressor according to an eighth embodiment, which is a modification of the first embodiment.
   The compressor 10 according to the eight embodiment is the same as the compressor 10 according to the first embodiment except for a first rotation speed sensor (swash plate rotation speed sensor) 85 for detecting the rotation speed of the swash plate 24, a second rotation speed sensor 86 for detecting the rotation speed of the guiding member 19, and an indicator 87,.which is, for example, a lamp.
   The first rotation speed sensor 85 includes a magnet 85a embedded in the outer edge of the swash plate 24 and a pickup coil 85b that is attached to the housing 11 and located in the crank chamber 16. When the magnet 85a passes by the pickup coil 85b, and a magnetic flux is generated, the pickup coil 85b generates pulses corresponding to the rotation speed of the swash plate 24 due to electromagnetic induction, and sends the pulses to the control computer 60.
   The second rotation speed sensor 86 is connected to a computer (not shown) for controlling, for example, the engine E. The computer uses the second rotation speed sensor 86 to obtain the rotation speed of the engine E (output shaft), in other words, to obtain a physical quantity related to the rotation speed of the guiding member 19. The computer for controlling the engine E sends information regarding the rotation speed detected by the second rotation speed sensor 86 to the control computer 60, which is communicatively connected to the engine computer. The control computer 60 obtains the rotation speed of the drive shaft 17, or the rotation speed of the guiding member 19, based on the rotation speed of the engine E and a predetermined pulley ratio of the power transmission mechanism PT.
   The control computer 60 judges whether the rotation speed of the swash plate 24 is lower than the rotation speed of the guiding member 19 (for example, whether the rotation speed of the swash plate 24 is equal to or lower than a predetermined value) when the clutch 26 is engaged, that is, when the computer 60 is commanding the drive circuit 61 to supply electricity to the control valve 40. This process corresponds to a slip judging portion. In the engaged state of the clutch 26, the rotation speed of the swash plate 24 falls below the rotation speed of the guiding member 19, that is, the swash plate 24 slips relative to the guiding member 19 (the clutch 26 is unable to transmit power at 100%) when the swash plate 24 and the shoes 31 adhere to each other and the torque required for rotating the swash plate 24 is unduly increased.
   When the outcome of the above judgment is positive, the control computer 60 commands the drive circuit 61 to stop the supply of electricity to the control valve 40, thereby disengaging the clutch 26.. This process corresponds to clutch controller. This frees the driving clutch surface 26a and the driven clutch surface 26b from a harsh sliding environment, and thus reduces deterioration due to wearing. Also, the displacement of the compressor 10 is minimized when the clutch 26 is disengaged. In this state, the stroke of the pistons 29 is minimized, and the torque required for wobbling the swash plate 24 is decreased to a low level. Therefore, the load on the guiding member 19 when the swash plate 24 wobbles is reduced.
   When the clutch 26 is disengaged, that is, when the computer 60 is commanding the drive circuit 61 to stop supplying electricity to the control valve 40, the control computer 60 judges whether the rotation speed of the swash plate 24 is more than a reference rotation speed that is stored in a RAM in advance . This process corresponds to an abnormality judging portion. In the disengaged state of the clutch 26, the rotation speed of the swash plate 24 surpasses the reference rotation speed if, for example, there is an abnormality in the clutch 26 and the transmission of power is not completely stopped. When the result of the judgment is positive, the control computer 60 stores an occurrence of the abnormality in the RAM (this process corresponds to memory portion) and causes the indicator (lamp) 87, which has been off, to light up or blink (alternatively, turns off the lighting indicator 87 or causes the lighting indicator 87 to blink or change the lighting color).
   The compressor according to the eighth embodiment has the same advantages (1) to (12) of the compressor according to the first embodiment. In addition, the compressor according to the eighth embodiment provides the following advantages (21) and (22).
(21) When the clutch 26 starts slipping while being engaged, the computer 60 disengages the clutch 26. Therefore, the guiding member 19 does not need to rotate the swash plate 24. This prevents rotation of the guiding member 19, that is, rotation of the drive shaft 17, from being locked. Therefore, the power transmission mechanism PT does not need to have a dedicated torque limiter, which simplifies the structure of the compressor 10.
   Particularly in this embodiment, the clutch 26 is disengaged when the displacement of the compressor 10 is minimized. Therefore, the torque required for wobbling the swash plate 24 is reduced when the swash plate 24 is adhered to the shoes 31. This further prevents adhesion between the swash plate 24 and the shoes 31 from affecting the guiding member 19. Also, since the swash plate 24 is scarcely caused to wobble or not caused to wobble at all, adhesion between the swash plate 24 and the shoes 31 is prevented from developing to a complete locked state.
(22) When the clutch 26 is disengaged, the control computer 60 stores the state where the rotation speed of the swash plate 24 is more than the reference rotation speed, or where there is an abnormality in the clutch 26. Therefore, a user or a mechanic can be easily informed of the abnormality by reading out the stored information related to the abnormality from the control computer 60 by using a service computer. Particularly in this embodiment, the indicator 87 shows the occurrence of the abnormality, a user or a mechanic can easily find an abnormality of the compressor 10 without using the service computer. That is, the indicator 87 is regarded as another memory portion other than the RAM incorporated in the control computer 60. From a different point of view, the indicator 87 is regarded as notifying portion for notifying a user or a mechanic of an abnormality.

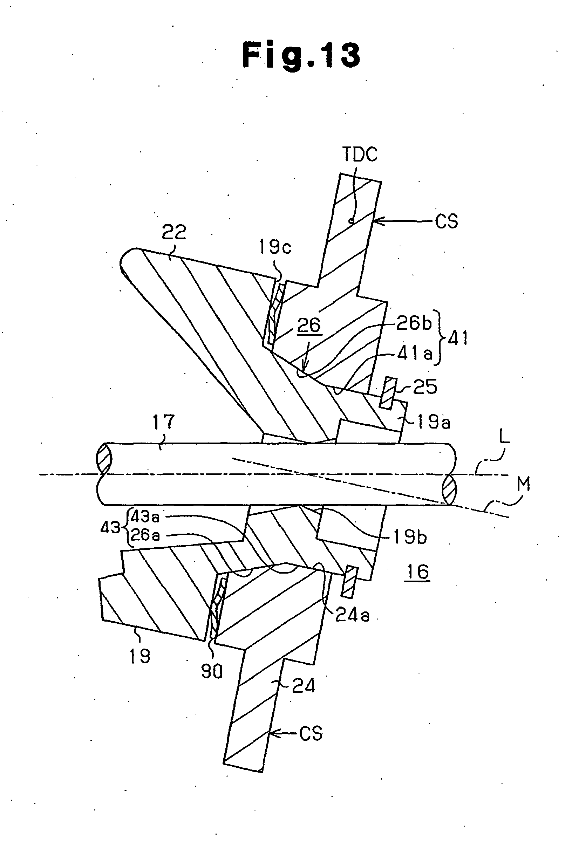

   Fig. 13 illustrates a compressor according to a ninth embodiment, which is a modification of the first embodiment.
   The compressor of the ninth embodiment is the same as the compressor of the first embodiment except that the spring holes 46, the springs 27, and the balls 47 are omitted. A disc spring 90 is located around the proximal portion of the boss 19a and between the limiting surface 19c of the guiding member 19 and the front side of the swash plate 24. The force of the spring 90 acts on the swash plate 24 substantially at equal magnitude around the central axis M.
   The compressor according to the ninth embodiment has the same advantages (1) to (4), and (9) to (12) of the compressor according to the first embodiment.
   If the force at a specific part of the spring 90, particularly a part corresponding to the top dead center portion TDC, is made stronger than the force at the other portion (for example, by increasing the thickness of the specific part, or the measurement between the guiding member 19 and the swash plate 24), the same advantage as the advantage (8) is obtained.

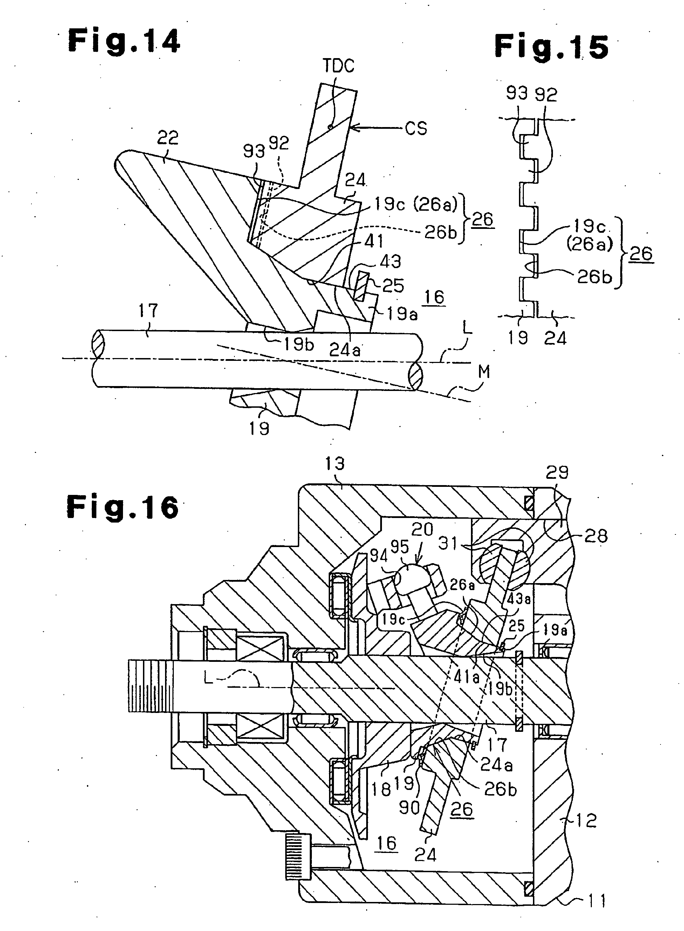

   Figs. 14 and 15 illustrate a compressor according to a tenth embodiment, which is a modification of the ninth embodiment. Hereafter, only the components different from those of the compressor according to the ninth embodiment are explained. The same, equivalent, or similar components are given the same numbers and detailed explanations are omitted.
   The compressor of the tenth embodiment is the same as the compressor of the ninth embodiment except that the spring 90 is omitted, and that the clutch 26 is changed to a dog clutch from the cone clutch. That is, the limiting surface 19c of the guiding member 19 functions as the driving clutch surface 26a. The driving clutch surface 26a has driving projections 92 at a predetermined pitch. The front side of the swash plate 24 that faces the limiting surface 19c functions as the driven clutch surface 26b. The driven clutch surface 26b has driven projections 93, which are arranged at the same pitch as that of the driving projections 92.
   When the swash plate 24 slides relative to the guiding member 19 in a direction along the central axis M, the driven clutch surface 26b is meshed with or separates from the driving clutch surface 26a. Accordingly, the clutch 26 is switched between the engaged state and the disengaged state. The corners of the driving projections 92 and the driven projections 93 are curved so that there is no edges.
   The compressors according to the tenth embodiment has the same advantages (1) to (3), (9) of the compressor according to the first embodiment, and the advantage (20) of the compressors according to the sixth and seventh embodiments. In addition, the compressor according to the tenth embodiment provides the following advantage (23).
(23) During the ON operation of the compressor 10, the clutch 26, which is a dog clutch, reliably maintains engagement, or connection, between the driving clutch surface 26a and the driven clutch surface 26b without causing slipping.
   Fig. 16 illustrates a compressor according to an eleventh embodiment, which is a modification of the ninth embodiment.
   The compressor of the ninth embodiment is the same as the compressor of the ninth embodiment except that the hinge mechanism 20 is changed from a pinless type to a pin type. That is, a pair of pin holes 94 are formed in the rotor 18, and a pair of pins 95 project from the guiding member 19 to be received by the pin. holes 94. When the inclination angle of the guiding member 19 and the swash plate 24 is changed, the pins 95 slide in the pin holes 94.
   The compressor according to the eleventh embodiment has the same advantages (1) to (4), and (9) to (12) of the compressor according to the first embodiment.

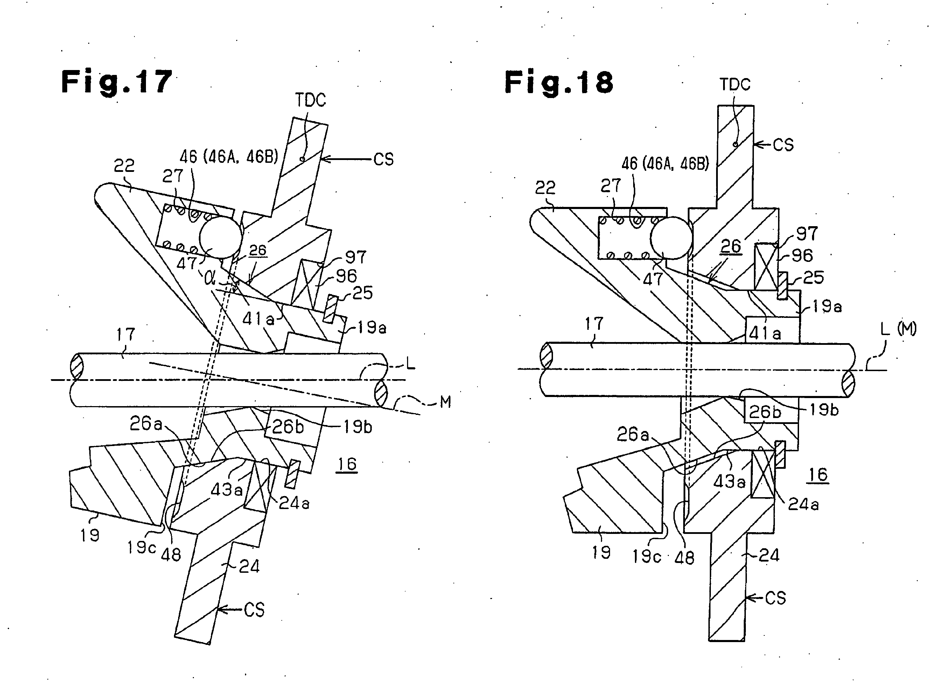

   Figs. 17 and 18 illustrate a compressor according to a twelfth embodiment, which is a modification of the first embodiment. Fig. 17 is an enlarged cross-sectional view illustrating a portion including a swash plate guiding member when a clutch is in the engaged state. Fig. 18 is an enlarged cross-sectional view illustrating a portion including the guiding member when the inclination angle is minimized and the clutch is in a disengaged state.
   The compressor according to twelfth embodiment is different from the compressor according to the first embodiment in that a thrust bearing 96 is located between the swash plate 24 and the snap ring 25. When the clutch 26 is in the disengaged state, the thrust bearing 96 rotatably supports the swash plate 24 relative to the snap ring 25.
   Specifically, a bearing receiving recess 97 is on the rear side of the swash plate 24 around the opening of the boss receiving hole 24a. The thrust bearing 96 is located in the bearing receiving recess 97. As shown in Fig. 17, when the clutch 26 is in the engaged state, the thrust bearing 96 is separated from the snap ring 25, and the thrust bearing 96 rotates integrally with the swash plate 24. As shown in Fig. 18, when the clutch 26 is in the disengaged state, the driven clutch surface 26b of the swash plate 24 is separated from the driving clutch surface 26a, and the thrust bearing 96 contacts the snap ring 25. In this state, since the swash plate 24 rotates relative to the guiding member 19, the swash plate 24 also rotates relative to the snap ring 25. The thrust bearing 96 rotates with receiving a load that is equal to the force of the springs 27 acting on the swash plate 24 through the balls 47.
   The compressor according to the twelfth embodiment has the same advantages (1) to (12) of the compressor according to the first embodiment. In addition, the compressor according to the twelfth embodiment provides the following advantage (24).
(24) Since the thrust bearing 96 is located between the swash plate 24 and the snap ring 25, mechanical loss between the swash plate 24 and the snap ring 25 when the clutch 26 is disengaged is further reduced.

The invention may be embodied in the following forms. The modifications may be combined as long as they do not conflict with each other.

The clutch 26 may be directly controlled from the outside with dedicated means. That is, for example, the clutch 26 may be replaced by an electromagnetic friction clutch or an electromagnetic powder clutch. Alternatively, a dedicated actuator (for example, an electromagnetic actuator) may be used for sliding the swash plate 24. In these cases, the clutch 26 can be switched regardless of the displacement of the compressor 10, that is, the opening degree of the control valve 40.

In the first to eighth embodiments, a disc spring or a wave spring may be used as the spring 27.

In the first to eighth embodiments, the spring holes 46, the springs 27, and the balls 47 may be provided in the swash plate 24.

In the first to eighth embodiments, additional sets of the spring holes 46, the springs 27, and the balls 47 may be provided in a range from three o' clock to nine o' clock along the clockwise direction.

In the first to eighth embodiments, the spring holes 46, the springs 27, and the balls 47 may be provided only in a range from three o' clock to nine o' clock along the clockwise direction.

In the first and three to eighth embodiments, the spring hole 46A and the spring hole 46B may be located at asymmetrical positions with respect to the imaginary plane H.

In the first to eighth embodiments, the balls 47 may be omitted.

In the first to eighth embodiments, the spring holes 46 may be omitted, and projections may be formed on the limiting surface 19c to support the springs 27. In this case, each spring 27 is fitted around a projection. A ball seat for holding the ball 47 is preferably formed on each spring 27.

In the first to eighth embodiments, the spring holes 46, the springs 27, the balls 47, and the roll groove 48 may be omitted.

In the ninth embodiment or the eleventh embodiment, a coil spring or an annular wave spring may be used as the spring 90.

In the ninth embodiment or the eleventh embodiment, the spring 90 may be omitted.

At least one of a surface of the snap ring 25 contacting the swash plate 24 and a surface of the swash plate 24 contacting the snap ring 25 may be coated (for example, with polytetrafluoroethylene) or plated (for example, with tin) to reduce the friction coefficient. In this configuration, mechanical loss between the swash plate 24 and the snap ring 25 when the clutch 26 is disengaged is reduced.

In the first, second, or fifth to eleventh embodiments, at least one of the constant diameter portion 43a of the boss 19a and the constant diameter portion 41a of the boss receiving hole 24a may be coated (for example, with polytetrafluoroethylene) or plated (for example, with tin) to reduce the friction coefficient. In this case, when the guiding member 19 and the swash plate 24 rotate relative to each other, that is, when the clutch 26 is in the disengaged state, the mechanical loss between the constant diameter portion 43a of the boss 19a and the constant diameter portion 41a of the boss receiving hole 24a is reduced. Further, when the clutch 26 is switched, the swash plate 24 is slid smoothly.

In the ninth embodiment or the eleventh embodiment, surface of the guiding member 19 and the swash plate 24 that contact the spring 90 or both side surface of the spring 90 may be coated (for example, with polytetrafluoroethylene) or plated (for example, with tin) to reduce the friction coefficient.

In the ninth embodiment or the eleventh embodiment, a thrust bearing may be provided in at least one of the space between the guiding member 19 and the spring 90 and the space between the swash plate 24 and the spring 90.

In the fifth embodiment, two or more reservoir grooves 79 may be provided.

In the fifth embodiment, two or more oil supply holes 78 may be provided.

In the fifth embodiment, the reservoir groove 79 may be formed only on the outer circumferential surface 43 of the boss 19a. Alternatively, two reservoir grooves 79 may be provided. In this case, one of the grooves 79 is formed on the inner circumferential surface 41 of the boss receiving hole 24a, and the other groove 79 is formed on the outer circumferential surface 43 of the boss 19a.

In the fifth embodiment, the reservoir groove 79 may be provided only in the constant diameter portion 41a.
Alternatively, the reservoir groove 79 may be provided only on the driven clutch surface 26b.

In the fifth embodiment, the reservoir groove 79 may be omitted.

In the fifth embodiment, the configuration of the oil supply portion 77 may be changed to supply lubricant oil to the space between the guiding member 19 and the swash plate 24 without using centrifugal force. For example, a pump that is actuated by rotation of the drive shaft 17 is provided, and by the action of the pump, lubricant oil is supplied to the space between the guiding member 19 and the swash plate 24.

In the tenth embodiment, the driving clutch surface 26a may formed on a part of the outer circumferential surface 43 of the boss 19a, and the driven clutch surface 26b may be formed on a part of the inner circumferential surface 41 of the boss receiving hole 24a. This modification has the advantage (10) of the compressor according to the first embodiment. In this case, the heights of the driving projections 92 and the driven projections 93 are preferably low.

In the tenth embodiment, a spring may be provided between the guiding member 19 and the swash plate 24, so that, when the clutch 26 is switched from the engaged state to the disengaged state, the force of the spring is used to slide the swash plate 24.

In the tenth embodiment, the oil supply portion 77 of the fifth embodiment may be used.

In the tenth embodiment, the radial bearing of the third or fourth embodiment may be used.

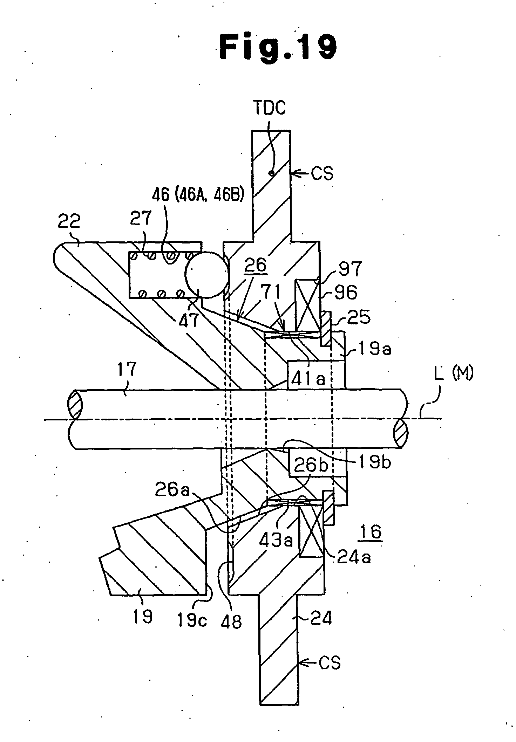

In the twelfth embodiment, the radial bearing of the third or fourth embodiment may be used as shown in Fig. 19.

The present invention may be applied to a compressor other than the refrigerant compressor. For example, the present invention may be applied to an air compressor.

## Claims

1. A swash plate type variable displacement compressor, **characterized by:**
a drive shaft;
a swash plate guiding member that is coupled to the drive shaft, wherein the guiding member rotates integrally with and inclines relative to the drive shaft;
a swash plate supported by the guiding member;
a shoe;
a piston engaged with the swash plate via the shoe, wherein, when the guiding member is rotated by rotation of the drive shaft, the piston reciprocates to compress gas, and
wherein, when an inclination angle of the swash plate relative to the drive shaft is changed as the guiding member inclines, the stroke of the piston is changed to vary the displacement of the compressor; and
a clutch located between the guiding member and the swash plate, wherein the clutch is switched between an engaged state, where the clutch permits the guiding member and the swash plate to rotate integrally, and a disengaged state, where the clutch permits the guiding member and the swash plate to rotate relative to each other.

2. The compressor according to claim 1, **characterized in that** the swash plate is supported by the guiding member to be slidable along a central axis of the swash plate,
wherein, when the swash plate slides relative to the guiding member in one direction along the central axis, the clutch is switched from the disengaged state to the engaged state, and
wherein, when the swash plate slides relative to the guiding member in the other direction along the central axis, the clutch is switched from the engaged state to the disengaged state.

3. The compressor according to claim 2, **characterized in that** the guiding member has a boss, wherein a boss receiving hole is formed in a central portion of the swash plate, and wherein the swash plate is supported by the boss at the boss receiving hole such that the swash plate is rotatable around the central axis and is slidable in directions along the central axis.

4. The compressor according to claim 3, **characterized in that** the boss has a slide limiter that limits sliding of the swash plate in a direction along the central axis, and
wherein, when the clutch has been switched from the engaged state to the disengaged state, the slide limiter contacts the swash plate to limit sliding of the swash plate in a direction away from a position corresponding to the engaged state.

5. The compressor according to any one of claims 2 to 4, **characterized in that** the swash plate is slid by compression reaction force acting on the swash plate through the piston as the gas is compressed so that the clutch is switched from the disengaged state to the engaged state.

6. The compressor according to any one of claims 2 to 5, **characterized in that** a spring is located between the guiding member and the swash plate, and
wherein the swash plate is slid by the force of the spring so that the clutch is switched from the engaged state to the disengaged state.

7. The compressor according to any one of claims 1 to 6, **characterized in that** a bearing is located between the guiding member and the swash plate, the bearing supporting the swash plate to be rotatable relative to the guiding member.

8. The compressor according to claim 4, **characterized in that** a thrust bearing is located between the swash plate and the slide limiter, the thrust bearing supporting the swash plate to be rotatable relative to the slide limiter when the clutch is in the disengaged state.

9. The compressor according to any one of claims 2 to 5, **characterized in that** a spring is located between the guiding member and the swash plate, wherein the swash plate is slid by the force of the spring so that the clutch is switched from the engaged state to the disengaged state, and
wherein a thrust bearing is located in a space between the spring and one of the guiding member and the swash plate that rotates relative to the spring when the clutch is in the disengaged state, the thrust bearing supporting the swash plate to be rotatable relative to the guiding member.

10. The compressor according to claim 6 or 9, **characterized in that** the swash plate has a top dead center portion that locates the piston at the top dead center, wherein the spring is arranged to apply the force to the top dead center portion on the swash plate around the central axis in a concentrated manner.

11. The compressor according to any one of claims 2 to 6 and 8 to 10, **characterized in that** a radial bearing is located between the guiding member and the swash plate, the radial bearing supporting the swash plate to be rotatable relative to the guiding member around the central axis and to be slidable in directions along the central axis.

12. The compressor according to any one of claims 1 to 11, **characterized in that** the clutch comprising a driving clutch surface formed on the guiding member and a driven clutch surface formed on the swash plate, and when the driving clutch surface contacts the driven clutch surface, the clutch is in the engaged state.

13. The compressor according to claim 3 or 4, **characterized in that** the clutch comprises a driving clutch surface formed on the guiding member and a driven clutch surface formed on the swash plate, and when the driving clutch surface contacts the driven clutch surface, the clutch is in the engaged state, and
wherein the driving clutch surface is formed on an outer circumferential surface of the boss, and the driven clutch surface is formed on an inner circumferential surface of the boss receiving hole.

14. The compressor according to claim 3 or 4, **characterized in that** the clutch comprising a driving clutch surface formed on the guiding member and a driven clutch surface formed on the swash plate, and when the driving clutch surface contacts the driven clutch surface, the clutch is in the engaged state, and
wherein the driving clutch surface and the driven clutch surface are located outside the boss receiving hole.

15. The compressor according to any one of claims 12 to 14, **characterized in that** the clutch is in the engaged state when the driving clutch surface contacts the driven clutch surface.

16. The compressor according to claim 15, **characterized in that** the driving clutch surface and the driven clutch surface are conical.

17. The compressor according to any one of claims 12 to 14, **characterized in that** projections are. formed on the driving clutch surface and the driven clutch surface, and wherein the clutch is in the engaged state when the driving surface and the driven clutch surface are meshed with each other.

18. The compressor according to any one of claims 1 to 17, **characterized by:**
an oil supply portion that supplies lubricant oil to a space between the guiding member and the swash plate when the guiding member and the swash plate rotate relative to each other.

19. The compressor according to claim 15 or 16, **characterized by:**
an oil supply portion that supplies lubricant oil to a space between the driving clutch surface and the driven clutch surface when the guiding member and the swash plate rotate relative to each other.

20. The compressor according to any one of claims 3, 4, 13 and 14, **characterized by:**
an oil supply portion that supplies lubricant oil to a space between an outer circumferential surface of the boss and an inner circumferential surface of the boss receiving hole when the guiding member and the swash plate rotate relative to each other.

21. The compressor according to claim 20, **characterized in that** the oil supply portion includes an oil supply hole formed in the guiding member, the oil supply hole having an outlet and an inlet of lubricant oil, and wherein the outlet is connected to the outer circumferential surface of the boss, and the inlet is located at a position that is closer to the drive shaft than the outlet.

22. The compressor according to claim 21, **characterized in that** the oil supply portion includes a reservoir groove that is formed on at least one of the outer circumferential surface of the boss and the inner circumferential surface of the boss receiving hole, and
wherein the reservoir groove extends in a direction along the central axis, and is connected to the outlet of the oil supply hole.

23. The compressor according to any one of claims 1 to 22, **characterized by:**
a first rotation speed sensor for detecting a rotation speed of the swash plate,
a second rotation speed sensor for detecting a rotation speed of the guiding member,
a slip judging portion that judges whether the rotation speed of the swash plate is lower than the rotation speed of the guiding member when the clutch is in the engaged state, and
a clutch controller that switches the clutch to the disengaged state when the result of judgment of the slip judging portion is positive.

24. The compressor according to any one of claims 1 to 23, **characterized by:**
a swash plate rotation speed sensor for detecting a rotation speed of the swash plate,
an abnormality judging portion that judges whether the rotation speed of the swash plate is more than a predetermined reference rotation speed when the clutch is in the disengaged state, and
a memory portion that stores an occurrence of abnormality when the result of judgment of the abnormality judging portion is positive.
